# EUROPEAN PATENT SPECIFICATION

(11) **EP 3 767 978 B1**
(45) Date of publication and mention of the grant of the patent: **08.12.2021**
(21) Application number: 19186285.3
(22) Date of filing: 15.07.2019
(51) Int. Cl.: H04W 4/44, H04W 4/90, H04W 76/50, H04W 4/021

(54) **ENHANCED EMERGENCY CALL ROUTING USING AN IN-VEHICLE SYSTEM**
VERBESSERTE NOTRUFWEITERLEITUNG UNTER VERWENDUNG EINES FAHRZEUGINTERNEN SYSTEMS
PROCÉDÉ D'ACHEMINEMENT AMÉLIORÉ D'APPEL D'URGENCE UTILISANT UN SYSTÈME EMBARQUÉ

(43) Date of publication of application: 20.01.2021
(73) Proprietor: Deutsche Telekom AG, 53113 Bonn (DE)
(72) Inventor: BÜCHTER, Martin, 53840 Troisdorf (DE); LAUSTER, Reinhard, 3100 St. Pölten (AT)
(74) Representative: Schwöbel, Thilo K.

(56) References cited:
- EP-A1- 2 947 856
- US-A1- 2011 287 733
- US-B1- 7 991 381

## Description

### BACKGROUND

The present invention relates a method for an enhanced emergency call routing using an in-vehicle system in a country or a geographic region within a country being part of the coverage area of a mobile communication network, wherein the in-vehicle system is able to initiate an emergency call in a situation of a serious threat for people, things or animals by means of at least initiating a regulatory mandated eCall emergency call, a voice emergency call, or an assistance voice call.

Furthermore, the present invention relates to an in-vehicle system for an enhanced emergency call routing using an in-vehicle system in a country or a geographic region within a country being part of the coverage area of a mobile communication network, wherein the in-vehicle system is able to initiate an emergency call in a situation of a serious threat for people, things or animals by means of at least initiating a regulatory mandated eCall emergency call, a voice emergency call, or an assistance voice call.

Furthermore, the present invention relates to a program and to a computer program product for an enhanced emergency call routing using an in-vehicle system in a country or a geographic region within a country.

The term eCall refers to a European initiative intended to bring early assistance to road users especially involved in a collision anywhere in the European Union. Nowadays, eCall is a mandatory feature in all new cars sold in the European Union.

Emergency call routing is determined by national and/or supranational (e.g. EU) regulation; hence, it is essential, e.g. for an operator of a mobile network and/or for a car manufacturer, to correctly handle and fulfil the corresponding regulations.

Typically, in a vehicle, there are different options how to handle an emergency call, or a call in response to a situation that might require an emergency call, or might be considered being an emergency situation. Emergency call systems of this type are described in documents US 2011/0287733 A1, EP 2 947 856 A1 and US 7,991,381 B1.

Especially in order to comply with regulatory requirements and/or restrictions, technical systems such as vehicles are often configured such that the decision which type of call or emergency call is to be invoked or initiated and/or which type of response or action is to be taken is taken at the recipient side of the call or emergency call, hence involving a recipient-based routing analysis, which - at least in some cases - results in the call not being routed to the most appropriate end point capable to handle the call.

### SUMMARY

An object of the present invention is to provide an effective and simple solution such that an in-vehicle system (or a user equipment being used in or in connection with a vehicle such that the user equipment together with the vehicle are forming an in-vehicle system) is able to be built, provided as well as used in a more effective manner while nevertheless complying with all national or regional regulatory requirements, especially regarding the implementation of emergency-related or non-emergency-related communication needs, of either the road users or passengers of vehicles involved or regarding, e.g. configurations, updates and/or malfunctions of the vehicle itself.

The invention is defined by a first independent method claim (claim 1), a second independent system claim (claim 8), a third independent program claim (claim 9), and a fourth independent computer-readable data carrier claim (claim 10). Further embodiments are specified by the dependent claims.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

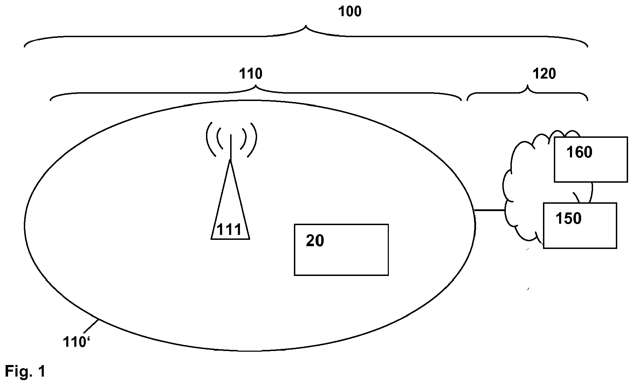

Figure 1 schematically illustrate an in-vehicle system according to the present invention, being located in a coverage area of a first mobile communication network (of a first country or geographic area) and being potentially moving towards the coverage area of a second mobile communication network (of a second country or geographic area).

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100 such as a public land mobile network is schematically shown. Roughly, the mobile communication network 100 typically covers or intends to cover a country or geographic area. The mobile communication network 100 comprises an access network 110 and a core network 120. The mobile communication network 100 typically comprises a plurality of network cells or radio cells, one of which is only schematically represented in Figure 1, a first radio cell 110' (having a base station entity 111) as part of the mobile communication network 100. The mobile communication network 100 comprises an emergency handling instance or emergency handling node 150 assigned to the first country or geographic region, e.g. a public safety answering point. Furthermore, the mobile communication network 100 comprises or is able to connect to a service provider instance or service provider node 160 such as a call-center.

An in-vehicle system 20 is schematically shown, in Figure 1, being located in the coverage area of the mobile communication network 100 (as well as being located in the country or geographical area and in the coverage area of the radio cell 110').

According to the present invention, a method for an enhanced emergency call routing is proposed, using the in-vehicle system 20 in the country or geographic region within the country being part of the coverage area of the mobile communication network 100.

In case that an emergency situation is detected by the in-vehicle system 20 (or communicated to the in-vehicle system 20, e.g. from a sensor or sensor system of the vehicle) that is requiring an emergency call, the in-vehicle system 20 is able to connect to the access network 110 and to initiate an emergency call. The emergency call is initiated either as:
-- a regulatory mandated eCall emergency call, the regulatory mandated eCall emergency call using an emergency services number, being directed to a public safety answering point, and having or carrying an emergency call indication, or
-- a voice emergency call, the voice emergency call using a emergency services number and being directed to a public safety answering point, or
-- an assistance voice call, the assistant voice call being a normal voice call directed to a predefined call-center which is responsible for the emergency situation.

The inventive method comprises, in a first step, an initial detection of the emergency situation, wherein the initial detection of the emergency situation
-- either is or relates to an emergency situation of a first (typically more serious) type, generally necessitating or triggering a regulatory mandated eCall emergency call,
-- or to an emergency situation of a second (typically less serious) type, generally necessitating or triggering a assistance voice call to a dedicated call-center.

In a second step, the inventive method comprises performing an additional analysis of the emergency situation, based on pieces of information available to the in-vehicle system 20. According to the present invention, the behavior of the in-vehicle system is optimized by means of using locally (at the in-vehicle system and/or at the vehicle) available information. Hence, in case that the additional analysis of the emergency situation holds that (despite the initial analysis indicating an emergency situation of a certain type (of the two types of emergency situations)) actually the emergency situation is rather of the other type, then the emergency call type related (or assigned or associated) to the other type of emergency situation is initiated or invoked. This means that in case that initially an emergency situation of the first type is detected (and the additional analysis holds that actually rather an emergency situation of the second type actually is the case) then either a regulatory mandated voice emergency call or a assistance voice call to a dedicated call center is initiated or performed by the in-vehicle system 20 (i.e. the emergency call type associated to the second type emergency situation is performed). Likewise, in case that initially an emergency situation of the second type is detected (and the additional analysis holds that actually rather an emergency situation of the first type actually is the case) then either a regulatory mandated eCall emergency call or a regulatory mandated voice emergency call is initiated or performed by the in-vehicle system 20 (i.e. the emergency call type associated to the first type emergency situation is performed).

According to an exemplary embodiment of the present invention, an eCall is placed using emergency number 112 (or similar) in a country in which eCall is not obligatory. Thus there is no public safety answering point that could handle this eCall but conventionally known voice emergency calls are feasible. If the mobile equipment (i.e. the in-vehicle system 20) is in dormant mode (i.e. it is not registered in the mobile communication network 100), in a first processing step, location data are gained, typically from a global navigation satellite system, and contained in the MSD (minimum set of data) is assessed. The longitude and latitude values allow to identify the country. In a second processing step, the PLMN ID of the network taking the call can be used to verify the location information and determine what type of emergency call is feasible (traditional voice emergency call, eCall) and handle the routing appropriately. In practice the most appropriate routing will be dependent from variables such as, e.g. time of day, region within the country and others. In this exemplary embodiment, the internal analysis and assessment of the credentials/configuration data (within the in-vehicle system 20) can be carried out with the in-vehicle system 20 being
-- either in dormant mode (in dormant mode the in-vehicle system 20 is not permanently registered to the mobile communication network 100 but activated only in case a call needs to be placed, e.g. in case of an accident; in case of an accident, an in-vehicle system 20 in dormant mode will try to register to a network, i.e. in the considered case to the mobile communication network 100; the routing configuration/credentials of the network deployed, either fully registered to the network or in limited service state can be utilized to determine the behavior of the in-vehicle system 20 (i.e. the correct routing of the call) and so improve response time for people involved),
-- or in active state (i.e. registered to the network, i.e. the mobile communication network 100). When being fully registered to a network or to the mobile communication network 100 (i.e. in non-dormant (or active or attached) mode), network-based credentials like e.g. PLMN-ID and/or configuration data (from local PLMN or home/network or manufacture configuration server) can be utilized which in turn are able to further improve / simplify the performance (i.e. correct routing of the call).

Emergency call routing relevant credentials/configuration data are available from the serving network, especially the local PLMN (i.e. the mobile communication network 100) or from the configuration server of the car manufacturer of the vehicle, such that, when registered to the network, the PLMNIDs are permanently available, and, when in limited service mode, the PLMNIDs are available during registration attempt. Emergency call routing relevant credentials /configuration data available from the car manufacturer (that are able to be proprietary per car trademark, dynamic updated data, etc.) might include:
-- the type of collision (front, side, back, multiple...),
-- acceleration sensors or their sensor values (severity of impact - e.g. parking damage, heavy impact),
-- the seatbelt sensors or their sensor values: the number of occupants in the car before a crash, the number of occupants after crash (thrown out / exited),
-- the condition of emergency call components (e.g. microphone, loudspeaker, camera),
-- a timestamp information such as: new/old accident.

## Claims

1. Method for an enhanced emergency call routing, said method being performed by an in-vehicle system (20) in a country or a geographic region within a country being part of the coverage area of a mobile communication network (100), the mobile communication network (100) having an access network (110), wherein - in case that an emergency situation is detected by the in-vehicle system (20) or communicated to the in-vehicle system (20), requiring an emergency call - the in-vehicle system (20) is able to connect to the access network (110) and to initiate an emergency call by means of at least
-- initiating a regulatory mandated eCall emergency call, the regulatory mandated eCall emergency call using an emergency services number, being directed to a public safety answering point, and having or carrying an emergency call indication, or
-- initiating a voice emergency call, the voice emergency call using a emergency services number and being directed to a public safety answering point, or
-- initiating an assistance voice call, the assistant voice call being a normal voice call directed to a predefined call-center which is responsible for the emergency situation,
wherein the method comprises the following steps:
-- in a first step, a detection of the emergency situation and an initial detection of the type of the emergency situation is performed, wherein the initial detection of the type of the emergency situation either is or relates to an emergency situation of a first type, necessitating or triggering a regulatory mandated eCall emergency call, or to an emergency situation of a second type, necessitating or triggering a assistance voice call to a dedicated call-center,
-- in a second step, subsequent to the first step, an additional analysis of the emergency situation is performed based on pieces of information available to the in-vehicle system (20), wherein the initial detection of the type of the emergency situation is revised or changed based on locally available data within the in-vehicle system or the vehicle, wherein - in case that initially an emergency situation of the first type is detected and the additional analysis holds that actually rather an emergency situation of the second type is the case - then either a voice emergency call or a assistance voice call to a dedicated call center is initiated or performed by the in-vehicle system (20), and wherein - in case that initially an emergency situation of the second type is detected and the additional analysis holds that actually rather an emergency situation of the first type is the case - then either a regulatory mandated eCall emergency call or a voice emergency call is initiated or performed by the in-vehicle system (20), wherein the additional analysis is based on a local assessment of one or a plurality of the following pieces of information available to the in-vehicle system (20):
-- the detected location of the in-vehicle system, especially the detected country where the in-vehicle system is currently located,
-- the time of the day or time of the week when the emergency call is to be initiated,
-- the availability of a specific access network or a type of access network.

2. Method according to claim 1, wherein the regulatory mandated eCall is either an EU standardized eCall emergency call or an ERA GLONASS eCall emergency call, or a Third Party eCall.

3. Method according to one of the preceding claims, wherein the assistance voice call can also be enhanced by emergency related data, especially similar data or data going beyond to eCall MSD data.

4. Method according to one of the preceding claims, wherein the initial detection of an emergency situation of the first type is based on one or a plurality of the following:
-- an airbag being triggered,
-- an acceleration sensor indicating a linear or angular acceleration exceeding a certain threshold value,
-- a manually initiated ecall emergency call is triggered,
-- location sensors detecting a location misalignment to an emergency situation, especially inside a parking garage and not on a motorway,
-- a car dashboard camera does not detect car crash,
-- a car radar sensors does not detect car crash.

5. Method according to one of the preceding claims, wherein the initial detection of an emergency situation of the second type is based on one or a plurality of the following:
-- a vehicle malfunction is detected,
-- an acceleration sensor indicating a linear or angular acceleration below a certain threshold value.

6. Method according to one of the preceding claims, wherein in case of a detected emergency situation requiring the emergency call - and during or after the emergency call is initiated by the in-vehicle system (20) - at least one further emergency call is initiated by the in-vehicle system (20),
wherein - in case that initially an emergency situation of the first type is detected - the at least one further emergency call is either a regulatory mandated eCall emergency call or a voice emergency call, and wherein - in case that initially an emergency situation of the second type is detected - the at least one further emergency call is either a voice emergency call or a assistance voice call to a predefined call center.

7. Method according to one of the preceding claims, wherein - in case that an eCall emergency call is possible but regulatorily not mandatory, and the call is initiated as either a regulatory mandated eCall emergency call, or as a voice emergency call - the decision to initiate the emergency call is taken irrespective of whether the in-vehicle system (20) is registered to the mobile communication network (100) or not permanently registered to the mobile communication network (100).

8. In-vehicle system (20) for an enhanced emergency call routing, said in-vehicle system (20) being adapted to be placed in a country or a geographic region within a country being part of the coverage area of a mobile communication network (100), the mobile communication network (100) having an access network (110), wherein - in case that an emergency situation is detected by the in-vehicle system (20) or communicated to the in-vehicle system (20), requiring an emergency call - the in-vehicle system (20) is able to connect to the access network (110) and to initiate an emergency call by means of at least
-- initiating a regulatory mandated eCall emergency call, the regulatory mandated eCall emergency call using a emergency services number, being directed to a public safety answering point, and having or carrying an emergency call indication, or
-- initiating a voice emergency call, the voice emergency call using a emergency services number and being directed to a public safety answering point, or
-- initiating a assistance voice call, the normal voice call is directed to a predefined call center,
wherein the in-vehicle system (20) is configured such that:
-- a detection of the emergency situation and an initial detection of the type of the emergency situation is performed, wherein the initial detection of the type of the emergency situation either is or relates to an emergency situation of a first type, necessitating or triggering a regulatory mandated eCall emergency call, or to an emergency situation of a second type, necessitating or triggering a assistance center call,
-- an additional analysis of the emergency situation is performed based on pieces of information available to the in-vehicle system (20), wherein the initial detection of the type of the emergency situation is revised or changed based on locally available data within the in-vehicle system or the vehicle, wherein - in case that initially an emergency situation of the first type is detected and the additional analysis holds that actually rather an emergency situation of the second type is the case - then either a voice emergency call or a assistance voice call to a dedicated call centers is initiated or performed by the in-vehicle system (20), and wherein - in case that initially an emergency situation of the second type is detected and the additional analysis holds that actually rather an emergency situation of the first type is the case - then either a regulatory mandated eCall emergency call or a voice emergency call is initiated or performed by the in-vehicle system (20), wherein the additional analysis is based on a local assessment of one or a plurality of the following pieces of information available to the in-vehicle system (20):
-- the detected location of the in-vehicle system, especially the detected country where the in-vehicle system is currently located,
-- the time of the day or time of the week when the emergency call is to be initiated,
-- the availability of a specific access network or a type of access network.

9. Program comprising a computer readable program code which, when executed on a computer or on an in-vehicle system (20), causes the computer or the in-vehicle system (20) to perform a method according one of claims 1 to 7.

10. A computer-readable data carrier having stored thereon the computer program of claim 9.

## Patentansprüche

1. Verfahren zur verbesserten Verteilung von Notrufen, wobei das Verfahren von einem Fahrzeugbordsystem (20) in einem Land oder einer geografischen Region innerhalb eines Landes durchgeführt wird, das/die sich im Abdeckungsbereich eines Mobilfunknetzes (100) befindet, wobei das Mobilfunknetz (100) ein Zugangsnetz (110) aufweist, wobei das Fahrzeugbordsystem (20) - wenn ein Notfall durch das Fahrzeugbordsystem (20) erfasst wird oder dem Fahrzeugbordsystem (20) mitgeteilt wird
- dazu befähigt ist, sich mit dem Zugangsnetz (110) zu verbinden und zumindest mittels der folgenden Vorgänge einen Notruf einzuleiten
- Einleiten eines gesetzlich vorgeschriebenen eCall-Notrufs, wobei der gesetzlich vorgeschriebene eCall-Notruf eine Notfalldienstnummer verwendet, an einen Antwortpunkt der öffentlichen Sicherheit geleitet wird, eine Notrufkennung aufweist oder damit versehen ist, oder
- Einleiten eines sprachgestützten Notrufs, wobei der sprachgestützte Notruf eine Notfalldienstnummer verwendet und an einen Antwortpunkt der öffentlichen Sicherheit geleitet wird, oder
- Einleiten eines sprachgestützten Hilferufs, wobei es sich bei dem sprachgestützten Hilferuf um einen normalen Anruf handelt, der an eine vorbestimmte Anrufplattform geleitet wird, die für den Notfall zuständig ist,
wobei das Verfahren weiterhin die folgenden Schritte umfasst:
- in einem ersten Schritt, Durchführen einer Erfassung des Notfalls und einer anfänglichen Erfassung der Art des Notfalls, wobei es sich bei dem anfänglichen Erfassen der Art des Notfalls entweder um einen Notfall einer ersten Art, der einen gesetzlich vorgeschriebenen eCall-Notruf erfordert oder auslöst, oder um einen Notfall der zweiten Art, der einen sprachgestützten Hilferuf an eine dafür vorgesehene Anrufplattform erfordert oder auslöst, handelt oder es sich auf einen der beiden bezieht,
- in einem zweiten Schritt, der auf den ersten Schritt folgt, Durchführen einer zusätzlichen Untersuchung des Notfalls auf Grundlage von Informationen, die dem Fahrzeugbordsystem (20) zur Verfügung stehen, wobei die anfängliche Erfassung der Art des Notfalls auf Grundlage der Daten, die vor Ort innerhalb des Fahrzeugbordsystems oder des Fahrzeugs zur Verfügung stehen, überarbeitet oder verändert wird, wobei das Fahrzeugbordsystem (20) - wenn anfänglich ein Notfall der ersten Art erfasst wurde und die zusätzliche Untersuchung ergibt, dass eher ein Notfall der zweiten Art vorliegt - entweder einen sprachgestützten Notruf oder einen sprachgestützten Hilferuf an eine dafür vorgesehen Anrufplattform einleitet oder durchführt, und wobei das Fahrzeugbordsystem (20) - wenn anfänglich ein Notfall der zweiten Art erfasst wurde und die zusätzliche Untersuchung ergibt, dass eher ein Notfall der ersten Art vorliegt - entweder einen gesetzlich vorgeschrieben eCall-Notruf oder einen sprachgestützten Notruf einleitet oder durchführt, wobei die zusätzliche Untersuchung darauf beruht, dass eine der folgenden Informationen, die dem Fahrzeugbordsystem (20) zur Verfügung stehen, oder eine Mehrzahl davon vor Ort auswertet werden:
- die erfasste Position des Fahrzeugbordsystems, insbesondere das erfasste Land, in dem sich das Fahrzeugbordsystem gegenwärtig befindet,
- der Zeitpunkt im Tagesverlauf oder der Zeitpunkt im Wochenverlauf, an dem der Notruf einzuleiten ist,
- die Verfügbarkeit eines spezifischen Zugangsnetzes oder einer Art von Zugangsnetz.

2. Verfahren nach Anspruch 1, wobei es sich bei dem gesetzlich vorgeschrieben eCall entweder um einen eCall-Notruf nach EU-Norm oder um einen ERA GLONASS eCall-Notruf oder um einen eCall eines Drittanbieters handelt.

3. Verfahren nach einem der vorhergehenden Ansprüche, wobei der sprachgestützte Hilferuf weiterhin durch notfallbezogene Daten verbessert wird, insbesondere durch ähnliche Daten oder Daten, die über die MSD-Daten des eCall hinausgehen.

4. Verfahren nach einem der vorhergehenden Ansprüche, wobei die anfängliche Erfassung eines Notfalls der ersten Art auf einem oder mehreren der folgenden beruht:
- dem Auslösen eines Airbags,
- einem Beschleunigungssensor, der angibt, dass eine geradlinige Beschleunigung oder Winkelbeschleunigung einen bestimmten Schwellenwert überschreitet,
- dem manuellen Auslösen eines eCall-Notrufs,
- Ortsbestimmungssensoren, die eine örtliche Fehlausrichtung hinsichtlich eines Notfalls erfassen, insbesondere innerhalb eines Parkhauses und nicht auf einer Autobahn,
- einer wageneigenen Armaturenbrett-Kamera, die keinerlei Verkehrsunfall erfasst,
- wageneigene Radar-Sensoren, die keinerlei Verkehrsunfall erfassen.

5. Verfahren nach einem der vorhergehenden Ansprüche, wobei die anfängliche Erfassung eines Notfalls der zweiten Art auf einem oder mehreren der folgenden beruht:
- dem Erfassen einer Störung des Fahrzeugs,
- einem Beschleunigungssensor, der angibt, dass eine geradlinige Beschleunigung oder Winkelbeschleunigung unter einem bestimmten Schwellenwert bleibt.

6. Verfahren nach einem der vorhergehenden Ansprüche, wobei im Falle der Erfassung eines Notfalls, der den Notruf erfordert
- und zwar, während der Notruf von dem Fahrzeugbordsystem (20) eingeleitet wird oder danach - mindestens ein weiterer Notruf von dem Fahrzeugbordsystem (20) eingeleitet wird,
wobei - wenn anfänglich ein Notfall der ersten Art erfasst wird - es sich bei dem mindestens einen weiteren Notruf entweder um einen gesetzlich vorgeschriebenen eCall-Notruf oder um einen sprachgestützten Notruf handelt, und wobei - wenn anfänglich ein Notfall der zweiten Art erfasst wird - es sich bei dem mindesten einen weiteren Notruf entweder um einen sprachgestützten Notruf oder um einen sprachgestützten Hilferuf an eine vorbestimmte Anrufplattform handelt.

7. Verfahren nach einem der vorhergehenden Ansprüche, wobei - wenn ein eCall-Notruf möglich, aber gesetzlich nicht vorgeschrieben ist, und der Ruf entweder als gesetzlich vorgeschriebener e-Call-Notruf oder als sprachgestützter Notruf eingeleitet wird - die Entscheidung, einen Notruf einzuleiten, unabhängig davon getroffen wird, ob das Fahrzeugbordsystem (20) beim Mobilfunknetz (100) angemeldet ist oder nicht dauerhaft beim Mobilfunknetz (100) angemeldet ist.

8. Fahrzeugbordsystem (20) zur verbesserten Verteilung von Notrufen, wobei das Fahrzeugbordsystem (20) dafür eingerichtet ist, in einem Land oder einer geografischen Region innerhalb eines Landes angeordnet zu werden wird, das/die sich im Abdeckungsbereich eines Mobilfunknetzes (100) befindet, wobei das Mobilfunknetz (100) ein Zugangsnetz (110) aufweist, wobei das Fahrzeugbordsystem (20) - wenn ein Notfall durch das Fahrzeugbordsystem (20) erfasst wird oder dem Fahrzeugbordsystem mitgeteilt wird - dazu befähigt ist, sich mit dem Zugangsnetz (110) zu verbinden und zumindest mittels der folgenden Vorgänge einen Notruf einzuleiten:
- Einleiten eines gesetzlich vorgeschriebenen eCall-Notrufs, wobei der gesetzlich vorgeschrieben eCall-Notruf eine Notrufdienstnummer verwendet, an einen Antwortpunkt der öffentlichen Sicherheit geleitet wird und eine Notrufkennung aufweist oder damit versehen ist, oder
- Einleiten eines sprachgestützten Notrufs, wobei der sprachgestützte Notruf eine Notfalldienstnummer verwendet und an einen Antwortpunkt der öffentlichen Sicherheit geleitet wird, oder
- Einleiten eines sprachgestützten Hilferufs, wobei der normale Anruf an eine vorbestimmte Anrufplattform geleitet wird,
wobei das Fahrzeugbordsystem (20) derart ausgelegt ist, dass
- eine Erfassung des Notfalls und eine anfängliche Erfassung der Art des Notfalls durchgeführt werden, wobei es sich bei dem anfänglichen Erfassen der Art des Notfalls entweder um einen Notfall einer ersten Art, der einen gesetzlich vorgeschriebenen eCall-Notruf erfordert oder auslöst, oder um einen Notfall der zweiten Art, der einen sprachgestützten Hilferuf an eine Anrufplattform erfordert oder auslöst, handelt oder es sich auf einen der beiden bezieht,
- eine zusätzliche Untersuchung des Notfalls auf Grundlage von Informationen durchgeführt wird, die dem Fahrzeugbordsystem (20) zur Verfügung stehen, wobei die anfängliche Erfassung der Art des Notfalls auf Grundlage der Daten, die vor Ort innerhalb des Fahrzeugbordsystems oder des Fahrzeugs zur Verfügung stehen, überarbeitet oder verändert wird, wobei das Fahrzeugbordsystem (20) - wenn anfänglich ein Notfall der ersten Art erfasst wurde und die zusätzliche Untersuchung ergibt, dass eher ein Notfall der zweiten Art vorliegt - entweder einen sprachgestützten Notruf oder einen sprachgestützten Hilferuf an eine dafür vorgesehen Anrufplattform einleitet oder durchführt, und wobei das Fahrzeugbordsystem (20) - wenn anfänglich ein Notfall der zweiten Art erfasst wurde und die zusätzliche Untersuchung ergibt, dass eher ein Notfall der ersten Art vorliegt - entweder einen gesetzlich vorgeschrieben eCall-Notruf oder einen sprachgestützten Notruf einleitet oder durchführt, wobei die zusätzliche Untersuchung darauf beruht, dass eine der folgenden Informationen, die dem Fahrzeugbordsystem (20) zur Verfügung stehen, oder eine Mehrzahl davon vor Ort auswertet werden:
- die erfasste Position des Fahrzeugbordsystems, insbesondere das erfasste Land, in dem sich das Fahrzeugbordsystem gegenwärtig befindet,
- der Zeitpunkt im Tagesverlauf oder der Zeitpunkt im Wochenverlauf, an dem der Notruf einzuleiten ist,
- die Verfügbarkeit eines spezifischen Zugangsnetzes oder einer Art von Zugangsnetz.

9. Programm, das einen maschinenlesbaren Programmcode umfasst, der bewirkt, wenn er auf einem Computer oder auf einem Fahrzeugbordsystem (20) ausgeführt wird, dass der Computer oder das Fahrzeugbordsystem (20) ein Verfahren nach einem der Ansprüche 1 bis 7 durchführt.

10. Maschinenlesbarer Datenträger, auf dem das Computerprogramm nach Anspruch 9 gespeichert ist.

## Revendications

1. Procédé pour un routage d'appel d'urgence amélioré, ledit procédé étant réalisé par un système embarqué (20) dans un pays ou une région géographique au sein d'un pays qui fait partie de la zone de couverture d'un réseau de communication mobile (100), le réseau de communication mobile (100) ayant un réseau d'accès (110),
dans lequel, dans le cas où une situation d'urgence est détectée par le système embarqué (20) ou communiquée au système embarqué (20), nécessitant un appel d'urgence, le système embarqué (20) est capable de se connecter au réseau d'accès (110) et de lancer un appel d'urgence au moyen d'au moins
- le lancement d'un appel d'urgence eCall prescrit par réglementation, l'appel d'urgence eCall prescrit par règlementation utilisant un numéro de services d'urgence, qui est adressé à un centre téléphonique de sécurité publique, et ayant ou acheminant une indication d'appel d'urgence, ou
- le lancement d'un appel d'urgence vocal, l'appel d'urgence vocal utilisant un numéro de services d'urgence et étant adressé à un centre téléphonique de sécurité publique, ou
- le lancement d'un appel vocal d'assistance, l'appel vocal d'assistance étant un appel vocal normal adressé à un centre d'appels prédéfini qui est en charge de la situation d'urgence,
dans lequel le procédé comprend les étapes suivantes :
- dans une première étape, une détection de la situation d'urgence et une détection initiale du type de la situation d'urgence sont réalisées, dans lequel la détection initiale du type de la situation d'urgence est ou concerne une situation d'urgence d'un premier type, nécessitant ou déclenchant un appel d'urgence eCall prescrit par réglementation, ou une situation d'urgence d'un second type, nécessitant ou déclenchant un appel vocal d'assistance vers un centre d'appels dédié,
- dans une deuxième étape, ultérieure à la première étape, une analyse supplémentaire de la situation d'urgence est réalisée sur la base d'éléments d'information à la disposition du système embarqué (20), dans lequel la détection initiale du type de la situation d'urgence est révisée ou modifiée sur la base de données localement disponibles au sein du système embarqué ou du véhicule, dans lequel, dans le cas où initialement une situation d'urgence du premier type est détectée et l'analyse supplémentaire estime qu'il s'agit plutôt d'une situation d'urgence du second type, alors un appel d'urgence vocal ou un appel vocal d'assistance vers un centre d'appels dédié est lancé ou réalisé par le système embarqué (20), et dans lequel, dans le cas où initialement une situation d'urgence du second type est détectée et l'analyse supplémentaire estime qu'il s'agit plutôt d'une situation d'urgence du premier type, alors un appel d'urgence eCall prescrit par règlementation ou un appel d'urgence vocal est lancé ou réalisé par le système embarqué (20), dans lequel l'analyse supplémentaire est basée sur une évaluation locale de l'un ou d'une pluralité des éléments d'information suivants à la disposition du système embarqué (20) :
- l'emplacement détecté du système embarqué, notamment le pays détecté où est actuellement situé le système embarqué,
- l'heure de la journée ou le moment de la semaine où l'appel d'urgence doit être lancé,
- la disponibilité du réseau d'accès spécifique ou d'un type de réseau d'accès.

2. Procédé selon la revendication 1, dans lequel l'eCall prescrit par règlementation est un appel d'urgence eCall normalisé européen ou un appel d'urgence eCall ERA GLONASS, ou un eCall de tiers.

3. Procédé selon l'une des revendications précédentes, dans lequel l'appel vocal d'assistance peut également être amélioré par des données relatives à une urgence, notamment des données similaires ou des données allant au-delà des données MSD eCall.

4. Procédé selon l'une des revendications précédentes, dans lequel la détection initiale d'une situation d'urgence du premier type est basée sur l'un ou une pluralité des éléments suivants :
- le déclenchement d'un coussin gonflable de sécurité,
- l'indication par un capteur d'accélération d'une accélération linéaire ou angulaire dépassant une certaine valeur seuil,
- le déclenchement d'un appel d'urgence eCall lancé manuellement,
- la détection par des capteurs d'emplacement d'un défaut d'alignement d'emplacement avec une situation d'urgence, notamment à l'intérieur d'un garage de stationnement et non sur une autoroute,
- la non-détection par une caméra de tableau de bord de voiture d'un accident de voiture,
- la non-détection par des capteurs radar de voiture d'un accident de voiture.

5. Procédé selon l'une des revendications précédentes, dans lequel la détection initiale d'une situation d'urgence du second type est basée sur l'un ou une pluralité des éléments suivants :
- la détection d'un dysfonctionnement de véhicule,
- l'indication par un capteur d'accélération d'une accélération linéaire ou angulaire en dessous d'une certaine valeur seuil.

6. Procédé selon l'une des revendications précédentes, dans lequel dans le cas d'une situation d'urgence détectée nécessitant l'appel d'urgence, et pendant ou après le lancement de l'appel d'urgence par le système embarqué (20), au moins un appel d'urgence supplémentaire est lancé par le système embarqué (20),
dans lequel, dans le cas où initialement une situation d'urgence du premier type est détectée, l'au moins un appel d'urgence supplémentaire est un appel d'urgence eCall prescrit par règlementation ou un appel d'urgence vocal, et dans lequel, dans un cas où initialement une situation d'urgence du second type est détectée, l'au moins un appel d'urgence supplémentaire est un appel d'urgence vocal ou un appel vocal d'assistance vers un centre d'appels prédéfini.

7. Procédé selon l'une des revendications précédentes, dans lequel, dans le cas où un appel d'urgence eCall est possible mais non prescrit par réglementation, et l'appel est lancé sous la forme d'un appel d'urgence eCall prescrit par réglementation, ou sous la forme d'un appel d'urgence vocal, la décision de lancer l'appel d'urgence est prise indépendamment du fait que le système embarqué (20) est enregistré auprès du réseau de communication mobile (100) ou non enregistré de façon permanente auprès du réseau de communication mobile (100).

8. Système embarqué (20) pour un routage d'appel d'urgence amélioré, ledit système embarqué (20) étant adapté pour être placé dans un pays ou une région géographique au sein d'un pays qui fait partie de la zone de couverture d'un réseau de communication mobile (100), le réseau de communication mobile (100) ayant un réseau d'accès (110),
dans lequel, dans le cas où une situation d'urgence est détectée par le système embarqué (20) ou communiquée au système embarqué (20), nécessitant un appel d'urgence, le système embarqué (20) est capable de se connecter au réseau d'accès (110) et de lancer un appel d'urgence au moyen d'au moins
- le lancement d'un appel d'urgence eCall prescrit par réglementation, l'appel d'urgence eCall prescrit par règlementation utilisant un numéro de services d'urgence, qui est adressé à un centre téléphonique de sécurité publique, et ayant ou acheminant une indication d'appel d'urgence, ou
- le lancement d'un appel d'urgence vocal, l'appel d'urgence vocal utilisant un numéro de services d'urgence et étant adressé à un centre téléphonique de sécurité publique, ou
- le lancement d'un appel vocal d'assistance, l'appel vocal normal est adressé à un centre d'appels prédéfini,
dans lequel le système embarqué (20) est configuré de sorte que :
- une détection de la situation d'urgence et une détection initiale du type de la situation d'urgence sont réalisées, dans lequel la détection initiale du type de la situation d'urgence est ou concerne une situation d'urgence d'un premier type, nécessitant ou déclenchant un appel d'urgence eCall prescrit par réglementation, ou une situation d'urgence d'un second type, nécessitant ou déclenchant un appel vers un centre d'appels dédié,
- une analyse supplémentaire de la situation d'urgence est réalisée sur la base d'éléments d'information à la disposition du système embarqué (20), dans lequel la détection initiale du type de la situation d'urgence est révisée ou modifiée sur la base de données localement disponibles au sein du système embarqué ou du véhicule, dans lequel, dans le cas où initialement une situation d'urgence du premier type est détectée et l'analyse supplémentaire estime qu'il s'agit plutôt d'une situation d'urgence du second type, alors un appel d'urgence vocal ou un appel vocal d'assistance vers un centre d'appels dédié est lancé ou réalisé par le système embarqué (20), et dans lequel, dans le cas où initialement une situation d'urgence du second type est détectée et l'analyse supplémentaire estime qu'il s'agit plutôt d'une situation d'urgence du premier type, alors un appel d'urgence eCall prescrit par règlementation ou un appel d'urgence vocal est lancé ou réalisé par le système embarqué (20), dans lequel l'analyse supplémentaire est basée sur une évaluation locale de l'un ou d'une pluralité des éléments d'information suivants à la disposition du système embarqué (20) :
- l'emplacement détecté du système embarqué, notamment le pays détecté où est actuellement situé le système embarqué,
- l'heure de la journée ou le moment de la semaine où l'appel d'urgence doit être lancé,
- la disponibilité du réseau d'accès spécifique ou d'un type de réseau d'accès.

9. Programme comprenant un code de programme lisible par ordinateur qui, lorsqu'il est lancé sur un ordinateur ou sur un système embarqué (20), amène l'ordinateur ou le système embarqué (20) à réaliser un procédé selon l'une des revendications 1 à 7.

10. Support de données lisible par ordinateur sur lequel est stocké le programme d'ordinateur de la revendication 9.
